# EUROPEAN PATENT SPECIFICATION

(11) **EP 3 973 525 B1**
(45) Date of publication and mention of the grant of the patent: **04.09.2024**
(21) Application number: 20742883.0
(22) Date of filing: 25.05.2020
(51) Int. Cl.: G06V 40/16, G09B 5/02, G09B 19/00

(54) **METHOD OF DELIVERING WEBINARS WITH CERTIFIED PARTICIPATION**
VERFAHREN ZUR BEREITSTELLUNG VON WEBINAREN MIT ZERTIFIZIERTER TEILNAHME
PROCÉDÉ POUR OFFRIR DES WEBINAIRES À PARTICIPATION CERTIFIÉE

(30) Priority: 23.05.2019 IT 201900007155
(43) Date of publication of application: 30.03.2022
(73) Proprietor: Teleskill Italia S.r.l., 00187 Rome (IT)
(72) Inventor: PUCCI, Emanuele, 00187 Rome (IT)
(74) Representative: IP Sextant s.r.l.
(86) International application number: PCT/IB2020/054935
(87) International publication number: WO 2020/234852

(56) References cited:
- JP-A- 2010 066 990
- US-A1- 2014 315 181
- US-A1- 2015 379 253
- US-A1- 2018 342 171
- QIAN TAO ET AL: "Biometric Authentication System on Mobile Personal Devices", IEEE TRANSACTIONS ON INSTRUMENTATION AND MEASUREMENT, IEEE SERVICE CENTER, PISCATAWAY, NJ, US, vol. 59, no. 4, 1 April 2010 (2010-04-01), pages 763 - 773, XP011304463, ISSN: 0018-9456

## Description

The present invention relates to a computer-implemented method of delivering webinars with certified participation that allows, in a simple, efficient and reliable way, to check and guarantee that a user completes a specific training course through one or more webinars, and to guarantee the integrity and authenticity of data relating to the training course and to the user, such as, for instance, a certificate of participation and/or passing a final examination of the training course.

The present invention further relates to a data processing system, comprising one or more data processing devices, configured to perform the method of delivering webinars with certified participation.

It is known that the remote attendance of educational sessions, called webinars, which are part of specific online training courses (e-learning) and which are carried out through computer systems usually based on the Internet network, are increasingly widespread. In particular, a webinar can be a live online or even recorded training, marketing or sales event, that allows to faithfully replicate what happens in an educational session, such as a seminar or a lesson, held in the presence, permitting to engage the participating users through various tools, such as chats, questionnaires and surveys, tracing all the participation data acquired during the webinar.

In this context, it is necessary to ensure that a user, who is required to participate in a webinar, has actually participated and carried out all the required activities, such as for instance completing a determined training course and certification of what happens online, certifying the identity of the participants and the authenticity of the training or marketing objectives achieved.

In the prior art, some solutions have been developed to meet this need, such as the systems and methods disclosed in documents US 2018/0342171 A1, concerning a method of managing lifelong learner events on a blockchain, US 2015/0379253 A1, concerning user identity authentication techniques for on-line content or access, and JP2010066990A, concerning a method and related system for personal identification of a user accessing a network to use contents, as well as in documents US 2003/0074558 A1, US 2014/0315181 A1 and US 2014/0322683 A1.

However, these prior art solutions are not entirely reliable in guaranteeing the identity of the participants and the authenticity of the training or marketing objectives achieved.

An uncertainty of the training provided to each participating user and of the tracking on participation and on the training results achieved derives from the above. The present invention relates to a method of delivering webinars with certified participation as defined in independent claim 1 and relates to a data processing system as defined in independent claim 11 and to computer programs and computer readable media as defined in independent claims 11 and 12.

It is an object of this invention, therefore, to allow, in a simple, efficient and reliable way, to check and guarantee that a univocally identified user completes a determined training course through one or more webinars, and to guarantee the integrity and authenticity of data relating to the training course and to the user.

It is specific subject matter of the present invention a computer-implemented method of delivering webinars with certified participation comprising the following steps:
A. supplying a webinar to a participating user through a screen of a user data processing device;
B. performing a biometric facial recognition and/or behavioural analysis of the participating user through a plurality of images acquired by a camera with which the user data processing device is provided, wherein said images automatically acquired by the camera in a corresponding plurality of different instants during delivery of the webinar are compared with one or more stored sample images of an expected participating user, identified on the basis of user credentials, which have been automatically acquired before the delivery of the webinar, wherein comparison between images is made through eigenfunctional classifiers extracting salient facial features;
C. monitoring a participation of the participating user in the webinar; and
D. storing data relating to the biometric facial recognition of the participating user and data relating to the participation of the participating user in the webinar in a blockchain.

According to another aspect of the invention, in step B, the comparison between images may be based on estimation models the parameters of which are determined through neural learning techniques.

According to a further aspect of the invention, in step B, the biometric facial recognition may use a holistic technique based on a eigenfaces method, in which a facial image is considered as a point of a high-dimensional image space, wherein a lower-dimensional representation is determined through a PCA technique identifying orthogonal axes having maximum variance.

According to an additional aspect of the invention, in step B, the PCA technique may use an adaptive mechanism that, on the basis of external conditions affecting the variance, is configured to perform a class specific projection with a linear discriminant analysis to minimize the variance inside one class, maximizing the variance between classes.

According to another aspect of the invention, in step C, one or more interactions of the participating user with the user data processing device following at least one test and/or at least one questionnaire and/or at least one survey and/or at least one examination proposed during the webinar on the user data processing device may be monitored, and, in step D, said data relating to the participation of the participating user in the webinar stored in said blockchain include data relating to said one or more interactions.

According to a further aspect of the invention, step D may allow the participating user to share with third parties such data relating to the facial biometric recognition of the participating user and said data related to the participation of the participating user in the webinar stored in said blockchain through access to a decentralised application, wherein such sharing is optionally governed by one or more public smart contracts.

According to an additional aspect of the invention, the method may further comprise the following step:
E. recognising and classifying patterns of biometric and/or behavioural data through big data analytics and/or business intelligence.

According to another aspect of the invention, the method may further comprise the following step:
F. performing a behavioural assessment through machine learning to estimate a level of interest of the participating user.

It is also specific subject matter of the present invention a data processing system comprising at least one data processing server and one or more data processing devices, each of which is provided with a screen and a camera, connected through the Internet network to said at least one server, wherein the data processing system is configured to perform the computer-implemented method of delivering webinars with certified participation described above.

It is still specific subject matter of the present invention a set of one or more computer programs comprising instructions which, when executed by a data processing system as just described, cause the data processing system to execute the computer-implemented method of delivering webinars with certified participation described above.

It is still specific subject matter of the present invention a set of one or more computer-readable media having stored thereon the just described set of one or more computer programs.

The computer-implemented method of delivering webinars with certified participation according to the invention is based on a biometric facial recognition, on a tracking of the participation and actual execution of possible surveys and questionnaires, as well as on a certification of data authenticity through blockchain.

The invention is usable for any online training use through, in particular live, of marketing and, more generally, in any context where it is necessary to certify the identity of the participating users, the participation and behaviours, and possibly the results achieved with the webinar attendance, such as for instance surveys, questionnaires and tests. The contexts of application can thus be academic, school, corporate training, lifelong learning, marketing and sales, online interactive audio-visual communication ones and any other context of knowledge sharing, provided that it is made with online or mixed (blended learning) digital tools.

The computer-implemented method of delivering webinars with certified participation according to the invention is configured to detect whether a participating user is actually connected to the webinar, through facial recognition carried out on the basis of images acquired by a camera with which the user's computer is provided or by a different data processing device (e.g. a smartphone) through which the user attends the webinar, and whether he/she remained in front of the screen, with which such user's computer (or different data processing device) is provided, that delivers the webinar itself, for the entire duration or only for a fraction of the webinar. In particular, facial recognition can take place before the start or during the webinar delivery at not necessarily pre-determined times, by acquiring the image of the participating user's face and comparing it with a photograph of the participating user's face taken at the time of registration through an artificial intelligence algorithm, allowing to detect whether there has been a user exchange during at least part of the webinar or not. Also, the analysis of these images taken during the webinar allows to analyse the behaviour of users through artificial intelligence algorithms (behavioural analysis) returning information in real time on the level of attention and the learning degree that are getting reached during the live e-learning training activities. This innovative technique exploits a system of analysis of flows (of images and videos) aimed at analysing the behaviour of the subjects identified through biometric recognition, in order to automatically and transparently evaluate their behavioural degree during the live webinar.

Furthermore, in the case of delivery of tests (or examinations or questionnaires) during the webinar, the method according to the invention allows to check whether the test has been actually made by the participating user registered in the webinar or by another person who unduly replaced him/her.

The present invention will be now described, by way of illustration and not by way of limitation, according to its preferred embodiments, by particularly referring to the Figures of the annexed drawings, in which:
Figure 1 schematically shows a preferred embodiment of a data processing system configured to perform a preferred embodiment of the computer-implemented method of delivering webinars with certified participation according to the invention; and
Figure 2 schematically shows the modules on which the preferred embodiment of the computer-implemented method of delivering webinars with certified participation according to the invention is based.

In the Figures identical reference numerals will be used for alike elements.

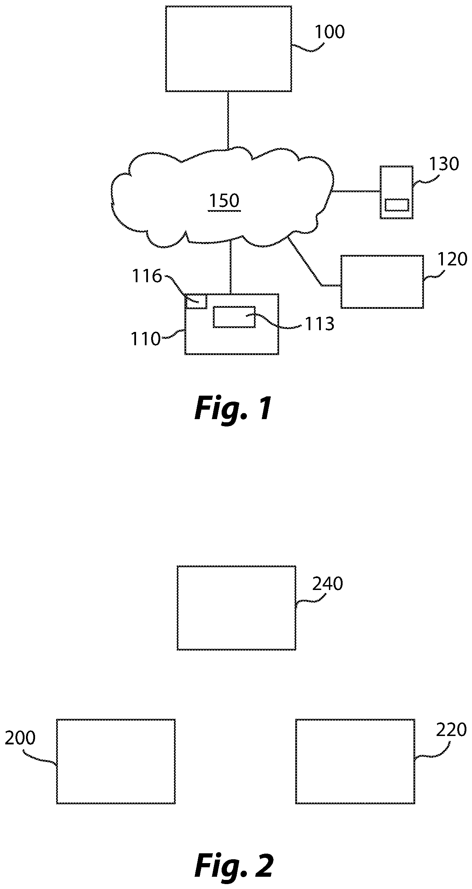

With reference to Figure 1, it may be observed that a preferred embodiment of the computer-implemented method of delivering webinars with certified participation according to the invention is implemented in a set of software programs installed on a plurality of data processing devices, for instance comprising at least one data processing server 100 and at least one user computer 110 (or a different device, for example a portable device such as a tablet 120 or a smartphone 130). The user computer 110 (as well as the other user data processing devices) is connected through the Internet network 150 to said at least one server 100, that is advantageously configured to perform a web application dedicated to the synchronous interactive audio-visual communication via web of contents, making up the webinar, proposed by a teacher or lecturer (who operates directly through the server 100 or through a user device, e.g. a computer, connected to the server 100) and received by the user data processing devices (such as those indicated with reference numerals 110, 120 and 130) which deliver them to respective remote users. Such contents making up the webinar may include: teacher's audio and video, possibly also integrated with slide presentations, images and simulations of use of a program available on the teacher's workstation (i.e. the server 100 or a user device, e.g. a computer, connected to the server 100). In particular, the teacher can also share specific contents, such as slides and/or documents, and/or even the entire screen of his/her workstation with the remote users.

In particular, advantageously such web application does not require any specific installation on the user data processing devices, directly delivering the webinar on such user data processing devices with a web browser. During the webinar, the connected users can use a chat service to interact with the teacher, asking questions or specific requests for clarification; the teacher may select the questions or requests that he/she deems most significant and may answer directly in real time during the same webinar. Furthermore, interactive moments such as tests, surveys or evaluation questionnaires with multiple choice questions may be organized: user participation is tracked, as well as the answers and the passing or failure of a possible examination.

With reference to Figure 2, it may be observed that the preferred embodiment of the computer-implemented method of delivering webinars with certified participation according to the invention is based on three main modules: a module 200 of biometric facial recognition; a module 220 for monitoring participation and possible tests, questionnaires and surveys; and a module 240 for the data authenticity certification through blockchain.

The biometric facial recognition module 200, performed at least in part by the server 100, identifies whether the participating user who attends the webinar, delivered by the server 100 through a screen 113 of the user computer 110, corresponds to the expected participating user. To this end, the biometric facial recognition module 200, optionally based on artificial intelligence algorithms, compares the images acquired by a camera 116 of the user computer 110 with stored images of the expected participating user, as it will be illustrated in greater detail later.

During the webinar, tests, questionnaires, surveys and/or examinations are proposed for which the participating user who attends the webinar, delivered by the server 100 through the screen 113 of the user's computer 110, must perform interactions, such as answers and selections, through the user computer 110. The module 220 for monitoring the participation and possible tests, questionnaires and surveys, performed at least in part by the server 100, tracks the time of stay of the participating user who attends the webinar, delivered by the server 100 through the screen 113 of the computer 110 of user, and the results of the interactions, such as answers and selections, that the participating user gives in real time to the tests, questionnaires and surveys, optionally proposed live by a teacher.

The data authenticity certification module 240, performed at least in part by the server 100, stores the data acquired by the other two modules 200 and 220 and related to the participation of the participating user (who attended the webinar, delivered by the server 100 through the screen 113 of the user computer 110) and the results of his/her interactions, such as answers and selections, tests, questionnaires and surveys, through blockchain. The participating user can access these data authenticated by the blockchain and can share them with third parties, such as an employer or a professional association that require certified training of the participating user.

In other words, the preferred embodiment of the computer-implemented method of delivering webinars with certified participation according to the invention performs a certification process including three main procedures.

First of all, the method according to the invention ascertains the identity of the user attending the webinar, delivered by the server 100 through the screen 113 of the user computer 110, through biometric facial recognition. Subsequently, the method according to the invention monitors what happens during the webinar, such as for instance the participation and the results of interactions, such as answers and selections in questionnaires. Finally, all data are stored so as to guarantee the integrity and authenticity of such data, as well as possible participation certificates (e.g. diplomas) through blockchain technology, optionally permissionless (such as the Ethereum blockchain or the EOS blockchain or the Gochain blockchain), which guarantees incorruptibility and transparency of data.

Optionally, the participating user may share the authenticated data with third parties, e.g. an employer, through access to a decentralised application (also known as DAPP and that, as known, is implemented through a decentralised code executed on a P2P (peer-to-peer) computer network). Advantageously, such sharing is exclusively governed by public smart contracts (as known, a smart contract translates a contract into code so as to automatically check the fulfilment of certain conditions and to automatically perform actions when the conditions determined between the parties are reached and verified). The third party wishing to verify data accesses the (encrypted) server 100 which queries the DAPP blockchain to verify the authenticity of the data; the user who participated in a webinar may access the server 100 and obtain a two-dimensional bar code, also known as QR code, that may be transmitted to a third party who can verify the authenticity of a certificate using the QR code received from the user, as it will be illustrated in more detail later.

The biometric facial recognition module 200 is configured to recognise the participating user through images acquired by the camera 116 of the user computer 110, checking his/her identity through a facial recognition system based on advanced image processing and machine learning techniques. In particular, biometric facial recognition is carried out by comparing the photographic images automatically acquired by the module 200 at different times of webinar delivery with sample photographic images stored in the server 100 which have been automatically acquired when the user registered on a platform of webinar delivery (advantageously by accessing the server 100). The comparison takes place through eigenfunctional classifiers which extract the salient features of the facial image and perform the comparison on the basis of estimation models the parameters of which are determined through neural training techniques.

The module 200 does not merely use face recognition techniques based on the geometric characteristics and marker points of the face, such as the position of the eyes, the position of the ears and the nose position, since these techniques have various limitations of performance. Differently, the biometric facial recognition module 200 uses a holistic technique based on the eigenfaces method, disclosed by M. Turk et al. in "Eigenfaces for recognition", Journal of cognitive neuroscience, vol. 3, no. 1, pp. 71-86, 1991. In particular, the module 200 considers a facial image as a point of a high-dimensional image space, substantially determined by the resolution of the images, whereby a lower-dimensional representation is determined in which the classification of the face and the associated recognition becomes easier.

The lower dimension subspace is found through the technique of principal component analysis, also known as PCA, disclosed by K. Pearson in "On Lines and Planes of Closest Fit to Systems of Points in Space", Philosophical Magazine , 6th Series, vol. II, pp. 559-572, 1901, and by M. Panella et al. in "Refining accuracy of environmental data prediction by MoG neural networks", Neurocomputing, vol. 55, no. 3-4, pp. 521-549, 2003. The PCA technique identifies the orthogonal axes having maximum variance.

Although this type of transformation is optimal from the reconstruction point of view, any class labels are not taken into account. In the method according to the invention, the module 200 implements an adaptive mechanism that, based on external conditions, such as for instance lighting, noise and clutter, which may affect data variance (as disclosed by M. Maisto et al. In " An Accurate Algorithm for the Identification of Fingertips Using an RGB-D Camera ", IEEE Journal on Emerging and Selected Topics in Circuits and Systems, vol. 3, no. 2, pp. 272-283, 2013), possibly carries out a class specific projection with a linear discriminant analysis, also known as LDA (Linear Discriminant Analysis), by Fisher (as disclosed by P.N. Belhumeur et al. in "Eigenfaces vs. fisherfaces: Recognition using class specific linear projection", IEEE Transactions on Pattern Analysis and Machine Intelligence, vol. 19, no. 7, pp. 711-720, 1997), to minimise the variance inside one class, while maximising the variance among classes.

In other words, the module 200, although starting from a mechanism consolidated in literature for facial representation, implements an innovative mechanism of modelling and classification of data according to the specific characteristics of the reference application problems. In particular, to drastically reduce the computational burden, biometric facial recognition of a particular face, represented by the projection in the appropriate feature space, is not carried out by comparing all the faces already stored and available in the database, the number of which may be too high with respect to the time constraints required to carry out the recognition; differently, the module 200 uses the webinar identification protocol, for which it is possible to know in advance the identity of the expected participant user to be recognised and accredited.

In this way, the vector of features (PCA eigenvectors) representing a face is compared only with those of the expected participant user, i.e. the participating user who declares to attend the webinar, i.e. with the sample photographic images of that expected participating user previously stored in the registration phase. To this end, the computer-implemented method of delivering webinars with certified participation according to the invention advantageously uses a conventional mechanism of authorised access to the webinar through username, password and/or token generation.

Thus, the positive or negative decision on the recognition takes place through a template matching technique (as disclosed by R. Brunelli in "Template Matching Techniques in Computer Vision: Theory and Practice", John Wiley & Sons, 2009), once a proper metric and an accurately calculated proper threshold have been established. In this regard, a training algorithm determines a data-driven model that, after a proper training phase on all available data, allows to automatically define the threshold for each one of the possible users to be recognised. In particular, the training is not necessary at each recognition to be carried out, but only periodically when the size and assortment of the registered users significantly changes in the database stored in the server 100.

As stated, a participating user may share authenticated data with third parties. By way of example, at the end of a webinar (that may possibly include the passing of an examination by the user), the participating user obtains a digital certificate (e.g. in pdf). The data authenticity certification module 240 calculates the hash of the content of the digital certificate that, via smart contract, is stored in the blockchain. From this moment, it can be said that the content of the digital certificate is "notarised" and a third party can verify the authenticity of the certificate according to two possible modes.

In a first mode, the digital certificate also carries a QR code containing the hash of the certificate. When the third party scans the QR code through a software application configured to connect to the server 100, a smart contract function is called that checks that the hash is actually present in the blockchain: in the positive (the hash is present in the blockchain), a successful check message is returned; otherwise, a message notifying of the possible counterfeiting of the document is returned (e.g. "this document may be counterfeited").

In a second mode, the third party may access the server 100 through a web page where he/she can upload the digital certificate, and the server 100 calculates the hash of the content of the digital certificate and checks whether it is present in the blockchain.

Other embodiments of the computer-implemented method of delivering webinars with certified participation may be structured so as to implement big data analytics and business intelligence techniques, configured to recognise and classify biometric and/or behavioural data patterns for a given optimization objective. In this case, the method comprises an additional analysis module implementing further feature extraction techniques, permitting to represent the acquired information in a data space sufficiently descriptive and adequate to guarantee the structural diversity of the data themselves (as disclosed by S. Theodoridis et al. in Pattern Recognition, 4th Edition, Academic Press, 2008, and by R. Altilio et al. In "Selection of clinical features for pattern recognition applied to gait analysis", Medical & Biological Engineering & Computing, vol. 55, no. 4, pp. 685-695, 2017). Also, the additional analysis module implements machine learning techniques to solve the specific problems of unsupervised learning for the recognition of similarities and diversities in data (clustering), i.e. of supervised learning for problems of classification, regression, and prediction of historical series (as disclosed by F.M. Frattale Mascioli et al. in "Scale-Based Approach to Hierarchical Fuzzy Clustering", Signal Processing, vol. 80, no. 6, pp. 1001-1016, 2000, by SO Haykin in Neural Networks and Learning Machines, 3rd Edition, Pearson, 2009, and by M. Panella in "Advances in biological time series prediction by neural networks", Biomedical Signal Processing and Control, vol. 6, no. 2, pp. 112-120, 2011) .

Further embodiments of the computer-implemented method of delivering webinars with certified participation may also carry out a behavioural assessment, through machine learning, to estimate the level of interest of each user participating in a webinar. In this regard, the method comprises an further additional behavioural assessment module that, through the massive collection and subsequent processing of data concerning the degree of engagement of the participating users, is configured to determine a level of interest for a given topic by the participating users. In this case, the additional behavioural assessment module performs a data extraction process defining structured patterns that unambiguously describe a determined behavioural measure, in particular through the coding of facial/vocal expression, the frequency of use of the interfaces of communication and results of previous individually distributed questionnaires. Once the behavioural classes that is desired to consider have been defined, taken a sufficiently descriptive sample of the various behavioural modes (training set), the additional behavioural assessment module trains neural classifiers for the association of the behavioural mode to a new observation of a participating user, optionally using non-exclusive techniques based on probabilistic or fuzzy data-driven models. In fact, with such models, it is possible to manage data uncertainty with greater robustness as several behavioural modes may be associated at the same time, each with its own level of probability/reliability, as disclosed by J.M. Mendel in Uncertain Rule-Based Fuzzy Logic Systems: Introduction and New Directions, Prentice Hall, 2000, and by C.M. Bishop in Pattern Recognition and Machine Learning, Springer, 2006. A decision support system, possibly even a human expert, may then make decisions on the behavioural assessment, depending on the objective to be pursued and the actions to be carried out, also taking account of possible risk matrices (as disclosed by J. Kruppa et al. in "Risk estimation and risk prediction using machine-learning methods", Human Genetics, vol. 131, no. 10, pp. 1639-1654, 2012, by R Altilio et al. In "A Classification Approach to Modeling Financial Time Series", Neural Advances in Processing Nonlinear Dynamic Signals, Smart Innovation, Systems and Technologies, vol. 102, pp. 97-106, Springer International Publishing, 2019). Therefore, the behavioural assessment module allows to monitor the users participating in the webinar through the camera 116 of the user computer 110, thus permitting to interpret their attitudes, such as attitudes of interest, boredom or engagement.

This allows to apply the computer-implemented method of delivering webinars with certified participation also in fields contiguous to those of e-learning, specifically in the security, advertising, and social networking fields.

The preferred embodiments of this invention have been described and a number of variations have been suggested hereinbefore, but it should be understood that those skilled in the art can make other variations and changes without so departing from the scope of protection thereof, as defined by the attached claims.

## Claims

1. Computer-implemented method of delivering webinars with certified participation comprising the following steps:
A. supplying a webinar to a participating user through a screen (113) of a user data processing device (110; 120; 130);
B. performing (200) a biometric facial recognition of the participating user through a plurality of images acquired by a camera (116) with which the user data processing device (110; 120; 130) is provided, wherein said images automatically acquired by the camera (116) in a corresponding plurality of different instants during delivery of the webinar are compared with one or more stored sample images of an expected participating user, identified on the basis of user credentials, which have been automatically acquired before the delivery of the webinar, wherein comparison between images is made through eigenfunctional classifiers extracting salient facial features;
C. monitoring (220) a participation of the participating user in the webinar; and
D. storing (240) data relating to the biometric facial recognition of the participating user and data relating to the participation of the participating user in the webinar in a blockchain.

2. Method according to claim 1, wherein, in step B, the comparison between images is based on estimation models the parameters of which are determined through neural learning techniques.

3. Method according to claim 1 o 2, wherein, in step B, the biometric facial recognition uses a holistic technique based on a eigenfaces method, in which a facial image is considered as a point of a high-dimensional image space, wherein a lower-dimensional representation is determined through a PCA technique identifying orthogonal axes having maximum variance.

4. Method according to claim 3, wherein, in step B, the PCA technique uses an adaptive mechanism that, on the basis of external conditions affecting the variance, is configured to perform a class specific projection with a linear discriminant analysis to minimize the variance inside one class, maximizing the variance between classes.

5. Method according to any one of the preceding claims, wherein, in step C, one or more interactions of the participating user with the user data processing device (110; 120; 130) following at least one test and/or at least one questionnaire and/or at least one survey and/or at least one examination proposed during the webinar on the user data processing device (110; 120; 130) are monitored, and wherein, in step D, said data relating to the participation of the participating user in the webinar stored in said blockchain include data relating to said one or more interactions.

6. Method according to any one of the preceding claims, wherein step D allows the participating user to share with third parties such data relating to the facial biometric recognition of the participating user and said data related to the participation of the participating user in the webinar stored in said blockchain through access to a decentralised application, wherein such sharing is optionally governed by one or more public smart contracts.

7. Method according to any one of the preceding claims, further comprising the following step:
E. recognising and classifying patterns of biometric data through big data analytics and/or business intelligence.

8. Method according to any one of the preceding claims, wherein step B further comprises performing (200) a behavioural analysis of the participating user through a plurality of images acquired by the camera (116).

9. Method according to claim 8, when depending on claim 7, wherein step E further comprises recognising and classifying patterns of behavioural data through big data analytics and/or business intelligence.

10. Method according to claim 8 or 9, further comprising the following step:
F. performing a behavioural assessment through machine learning to estimate a level of interest of the participating user.

11. Data processing system comprising at least one data processing server (100) and one or more data processing devices (110; 120; 130), each of which is provided with a screen (113) and a camera (116), connected through the Internet network (150) to said at least one server (100), wherein the data processing system is configured to perform the computer-implemented method of delivering webinars with certified participation according to any of claims 1 to 10.

12. Set of one or more computer programs comprising instructions which, when executed by a data processing system according to claim 11, cause the data processing system to execute the computer-implemented method of delivering webinars with certified participation according to any of claims 1 to 10.

13. Set of one or more computer-readable media having stored thereon the set of one or more computer programs according to claim 12.

## Patentansprüche

1. Computerimplementiertes Verfahren zum Bereitstellen von Webinaren mit zertifizierter Teilnahme, umfassend die folgenden Schritte:
A. Bereitstellen eines Webinars für einen teilnehmenden Benutzer durch einen Bildschirm (113) einer Benutzerdatenverarbeitungsvorrichtung (110; 120; 130);
B. Durchführen (200) einer biometrischen Gesichtserkennung des teilnehmenden Benutzers durch eine Vielzahl von Bildern, die von einer Kamera (116) erfasst werden, mit der die Benutzerdatenverarbeitungsvorrichtung (110; 120; 130) versehen ist, wobei die Bilder, die von der Kamera (116) in einer entsprechenden Vielzahl von verschiedenen Zeitpunkten während der Bereitstellung des Webinars automatisch erfasst werden, mit einem oder mehreren gespeicherten Beispielbildern eines erwarteten teilnehmenden Benutzers verglichen werden, die auf der Grundlage von Benutzeranmeldeinformationen identifiziert werden, die vor der Bereitstellung des Webinars automatisch erfasst wurden, wobei der Vergleich zwischen Bildern durch eigenfunktionale Klassifizierer erfolgt, die hervorstechende Gesichtsmerkmale extrahieren;
C. Überwachen (220) einer Teilnahme des teilnehmenden Benutzers am Webinar; und
D. Speichern (240) von Daten in Bezug auf die biometrische Gesichtserkennung des teilnehmenden Benutzers und von Daten in Bezug auf die Teilnahme des teilnehmenden Benutzers am Webinar in einer Blockchain.

2. Verfahren nach Anspruch 1, wobei in Schritt B der Vergleich zwischen Bildern auf Schätzmodellen basiert, deren Parameter durch Techniken des neuronalen Lernens bestimmt werden.

3. Verfahren nach Anspruch 1 oder 2, wobei in Schritt B die biometrische Gesichtserkennung eine holistische Technik verwendet, die auf einem Eigengesichtsverfahren basiert, bei dem ein Gesichtsbild als ein Punkt eines hochdimensionalen Bildraums betrachtet wird, wobei eine niederdimensionale Darstellung durch eine Hauptkomponentenanalyse-Technik bestimmt wird, die orthogonale Achsen mit maximaler Varianz identifiziert.

4. Verfahren nach Anspruch 3, wobei in Schritt B die Hauptkomponentenanalyse-Technik einen adaptiven Mechanismus verwendet, der dazu konfiguriert ist, basierend auf externen Bedingungen, die die Varianz beeinflussen, eine klassenspezifische Projektion mit einer linearen Diskriminanzanalyse durchzuführen, um die Varianz innerhalb einer Klasse zu minimieren, wodurch die Varianz zwischen Klassen maximiert wird.

5. Verfahren nach einem der vorhergehenden Ansprüche, wobei in Schritt C eine oder mehrere Interaktionen des teilnehmenden Benutzers mit der Benutzerdatenverarbeitungsvorrichtung (110; 120; 130) nach mindestens einem Test und/oder mindestens einem Fragebogen und/oder mindestens einer Befragung und/oder mindestens einer Untersuchung, die während des Webinars auf der Benutzerdatenverarbeitungsvorrichtung (110; 120; 130) vorgeschlagen wird, überwacht werden, und wobei in Schritt D die Daten in Bezug auf die Teilnahme des teilnehmenden Benutzers am Webinar, die in der Blockchain gespeichert sind, Daten in Bezug auf die eine oder die mehreren Interaktionen umfassen.

6. Verfahren nach einem der vorhergehenden Ansprüche, wobei Schritt D es dem teilnehmenden Benutzer ermöglicht, solche Daten in Bezug auf die biometrische Gesichtserkennung des teilnehmenden Benutzers und die Daten in Bezug auf die Teilnahme des teilnehmenden Benutzers am Webinar, die in der Blockchain gespeichert sind, durch Zugriff auf eine dezentrale Anwendung mit Dritten zu teilen, wobei eine solche Teilung optional durch einen oder mehrere öffentliche intelligente Verträge geregelt wird.

7. Verfahren nach einem der vorhergehenden Ansprüche, ferner umfassend den folgenden Schritt:
E. Erkennen und Klassifizieren von Mustern biometrischer Daten durch Big Data Analytics und/oder Business Intelligence.

8. Verfahren nach einem der vorhergehenden Ansprüche, wobei Schritt B ferner das Durchführen (200) einer Verhaltensanalyse des teilnehmenden Benutzers durch eine Vielzahl von Bildern umfasst, die von der Kamera (116) erfasst werden.

9. Verfahren nach Anspruch 8, wenn abhängig von Anspruch 7, wobei Schritt E ferner das Erkennen und Klassifizieren von Mustern von Verhaltensdaten durch Big Data Analytics und/oder Business Intelligence umfasst.

10. Verfahren nach Anspruch 8 oder 9, ferner umfassend den folgenden Schritt: F. Durchführen einer Verhaltensbeurteilung durch maschinelles Lernen, um einen Grad des Interesses des teilnehmenden Benutzers zu schätzen.

11. Datenverarbeitungssystem, umfassend mindestens einen Datenverarbeitungsserver (100) und eine oder mehrere Datenverarbeitungsvorrichtungen (110; 120; 130), von denen jede mit einem Bildschirm (113) und einer Kamera (116) versehen ist, die über das Internetnetzwerk (150) mit dem mindestens einen Server (100) verbunden sind, wobei das Datenverarbeitungssystem dazu konfiguriert ist, das computerimplementierte Verfahren zum Bereitstellen von Webinaren mit zertifizierter Teilnahme nach einem der Ansprüche 1 bis 10 durchzuführen.

12. Satz von einem oder mehreren Computerprogrammen, umfassend Anweisungen, die, wenn sie von einem Datenverarbeitungssystem nach Anspruch 11 ausgeführt werden, bewirken, dass das Datenverarbeitungssystem das computerimplementierte Verfahren zum Bereitstellen von Webinaren mit zertifizierter Teilnahme nach einem der Ansprüche 1 bis 10 ausführt.

13. Satz von einem oder mehreren computerlesbaren Medien, auf denen der Satz von einem oder mehreren Computerprogrammen nach Anspruch 12 gespeichert ist.

## Revendications

1. Procédé mis en oeuvre par ordinateur pour la diffusion de webinaires avec participation certifiée comprenant les étapes suivantes :
A. fourniture d'un webinaire à un utilisateur participant via un écran (113) d'un dispositif de traitement de données utilisateur (110 ; 120 ; 130) ;
B. réalisation (200) d'une reconnaissance faciale biométrique de l'utilisateur participant à l'aide d'une pluralité d'images acquises par une caméra (116) dont le dispositif de traitement de données utilisateur (110 ; 120 ; 130) est équipé, où lesdites images acquises automatiquement par la caméra (116) lors une pluralité correspondante d'instants différents pendant la diffusion du webinaire sont comparées à une ou plusieurs images d'échantillons stockées d'un utilisateur participant attendu, identifié sur la base des informations d'identification de l'utilisateur, qui ont été automatiquement acquises avant la diffusion du webinaire, où la comparaison entre les images est réalisée par des classificateurs à fonction propre extrayant des caractéristiques faciales saillantes ;
C. surveillance (220) de la participation de l'utilisateur participant au webinaire ; et
D. stockage (240) des données relatives à la reconnaissance faciale biométrique de l'utilisateur participant et des données relatives à la participation de l'utilisateur participant au webinaire dans une chaîne de blocs.

2. Procédé selon la revendication 1, où, à l'étape B, la comparaison entre les images est basée sur des modèles d'estimation dont les paramètres sont déterminés par des techniques d'apprentissage neuronal.

3. Procédé selon la revendication 1 ou 2, où, à l'étape B, la reconnaissance faciale biométrique utilise une technique holistique basée sur une méthode des visages propres (eigenfaces), où une image faciale est considérée comme un point d'un espace d'image de haute dimension, où une représentation de dimension inférieure est déterminée par une technique PCA identifiant des axes orthogonaux ayant une variance maximale.

4. Procédé selon la revendication 3, où, à l'étape B, la technique PCA utilise un mécanisme adaptatif qui, sur la base de conditions externes affectant la variance, est configuré pour effectuer une projection spécifique de classe avec une analyse discriminante linéaire afin de minimiser la variance au sein d'une classe, en maximisant la variance entre les classes.

5. Procédé selon l'une quelconque des revendications précédentes, où, à l'étape C, une ou plusieurs interactions de l'utilisateur participant avec le dispositif de traitement de données utilisateur (110 ; 120 ; 130) suite à au moins un test et/ou au moins un questionnaire et/ou au moins un sondage et/ou au moins un examen proposé pendant le webinaire sur le dispositif de traitement de données utilisateur (110 ; 120 ; 130) sont surveillées, et où, à l'étape D, lesdites données relatives à la participation de l'utilisateur participant au webinaire stockées dans ladite chaîne de blocs incluent des données relatives à ladite ou auxdites interactions.

6. Procédé selon l'une quelconque des revendications précédentes, où l'étape D permet à l'utilisateur participant de partager avec des tiers lesdites données relatives à la reconnaissance faciale biométrique de l'utilisateur participant et lesdites données relatives à la participation de l'utilisateur participant au webinaire stockées dans ladite chaîne de blocs par le biais d'un accès à une application décentralisée, ce partage étant optionnellement régi par un ou plusieurs contrats intelligents publics.

7. Procédé selon l'une quelconque des revendications précédentes, comprenant en outre l'étape suivante :
E. reconnaissance et classification de motifs de données biométriques grâce à l'analyse des mégadonnées et/ou à l'intelligence d'affaires.

8. Procédé selon l'une quelconque des revendications précédentes, où l'étape B comprend en outre la réalisation (200) d'une analyse comportementale de l'utilisateur participant à l'aide d'une pluralité d'images acquises par la caméra (116).

9. Procédé selon la revendication 8, lorsqu'elle dépend de la revendication 7, où l'étape E comprend en outre la reconnaissance et la classification de motifs de données comportementales grâce à l'analyse des mégadonnées et/ou à l'intelligence d'affaires.

10. Procédé selon la revendication 8 ou 9, comprenant en outre l'étape suivante : F. réalisation d'une évaluation comportementale par apprentissage automatique pour estimer le niveau d'intérêt de l'utilisateur participant.

11. Système de traitement de données comprenant au moins un serveur de traitement de données (100) et un ou plusieurs dispositifs de traitement de données (110 ; 120 ; 130), chacun étant équipé d'un écran (113) et d'une caméra (116), connectés via le réseau Internet (150) audit au moins un serveur (100), où le système de traitement de données est configuré pour exécuter le procédé mis en oeuvre par ordinateur pour la diffusion de webinaires avec participation certifiée selon l'une quelconque des revendications 1 à 10.

12. Ensemble d'un ou plusieurs programmes informatiques comprenant des instructions qui, lorsqu'elles sont exécutées par un système de traitement de données selon la revendication 11, amènent le système de traitement de données à exécuter le procédé mis en oeuvre par ordinateur pour la diffusion de webinaires avec participation certifiée selon l'une quelconque des revendications 1 à 10.

13. Ensemble d'un ou plusieurs supports lisibles par ordinateur sur lequel est stocké l'ensemble d'un ou plusieurs programmes informatiques selon la revendication 12.
